# EUROPÄISCHE PATENTSCHRIFT

(11) **EP 2 629 872 B1**
(45) Veröffentlichungstag und Bekanntmachung des Hinweises auf die Patenterteilung: **14.02.2018**
(21) Anmeldenummer: 11771031.9
(22) Anmeldetag: 17.10.2011
(51) Int. Cl.: B01D 29/23, B01D 35/153, B01D 29/88

(54) **FILTERVORRICHTUNG**
FILTER DEVICE
DISPOSITIF FILTRANT

(30) Priorität: 18.10.2010 DE 102010049975
(43) Veröffentlichungstag der Anmeldung: 28.08.2013
(73) Patentinhaber: Hydac Filtertechnik GmbH, 66280 Sulzbach/Saar (DE)
(72) Erfinder: SCHMITT, Ralf, 66636 Tholey (DE)
(74) Vertreter: Bartels, Martin Erich Arthur
(86) Internationale Anmeldenummer: PCT/EP2011/005191
(87) Internationale Veröffentlichungsnummer: WO 2012/052139

(56) Entgegenhaltungen:
- DE-B3-102009 007 389
- DE-U1-202005 012 435
- US-A1- 2006 219 626

## Beschreibung

Die Erfindung betrifft eine Filtervorrichtung mit den Merkmalen im Oberbegriff von Anspruch 1. Die Erfindung betrifft ferner einen Tank mit einer solchen Filtervorrichtung.

Derartige Filtervorrichtungen sind in einer Vielzahl von Bau- und Ausführungsformen auf dem Markt frei erhältlich. Solche Filtervorrichtungen dienen vor allem dazu, Verschmutzungen in Fluiden, wie Hydrauliköl, aus diesen herauszufiltrieren. Verschmutzungen des Hydrauliköls erfolgen bei der Montage oder bei der Inbetriebnahme der jeweiligen Hydraulikanlage. Neben solchen Anfangsverschmutzungen kann es zu Verschmutzungen während des Betriebes kommen, beispielsweise durch Eindringen von Schmutz am Hydrauliktank aufgrund unzureichender Tankbelüftung, Rohrdurchführungen, Kolbenstangenabdichtungen und dergleichen mehr. Insbesondere bei Hydraulikanlagen von Arbeitsmaschinen, wie Erdbewegungsmaschinen, Baggern od. dgl., kann es dabei zu Verschmutzungen innerhalb des im Hydrauliktank bevorrateten Fluids kommen. Ferner kann es bei derartigen Anwendungen der Filtervorrichtung zweckmäßig sein, die Filtration unmittelbar im Bereich des Hydrauliktanks zu veranlassen, beispielsweise indem man die Filtervorrichtung direkt in den Tank einbaut.

Durch die DE 10 2007 056 362 A1 ist eine Filtervorrichtung, insbesondere in Form eines sogenannten Rücklauf-Saugfilters, bekannt, mit mindestens einem Filtergehäuse, in dem mindestens ein eine Längsachse definierendes Filterelement aufnehmbar ist, und mit mindestens zwei Ventileinheiten, insbesondere in Form eines Bypassventils und eines Vorspannventils, wobei die genannten Ventileinheiten in zur Längsachse des jeweiligen Filterelementes konzentrischer Anordnung längs dieser Längsachse angeordnet sind.

Durch die DE 10 2006 011 844 B4 ist ein Filterelement bekannt mit einem einen Innenraum begrenzenden Filtertopf mit einem Bodenteil, das einen Fluiddurchlass aufweist, mit einem im Innenraum des Filtertopfes befindlichen Filtermedium sowie mit einem durch den Fluiddruck ansteuerbaren Ventilkörper einer Ventileinrichtung am Fluiddurchlass des Bodenteils, wobei der Ventilkörper einen schirmartigen, flexiblen Schließmantel aufweist, der im aufgespannten Zustand den Fluiddurchlass sperrt und, durch den Fluiddruck in Richtung auf seine geschlossene Stellung hin bewegt, den Fluiddurchlass freigibt.

Bei diesen beiden vorstehend genannten Filterlösungen sind die jeweiligen Ventilanordnungen bei im Filtergehäuse eingebautem Filterelement in ihrer jeweils vorgesehenen Funktionsstellung und durch den jeweils herrschenden Fluiddruck, insbesondere des zu filtrierenden Fluids, entsprechend angesteuert. Unter Einsatzbedingungen, wie sie bei einem Betrieb der Filtervorrichtung in Baumaschinen oder anderen im Freien zu betreibenden Arbeitsgeräten herrschen, muß wegen der anfallenden, höheren Verschmutzungsraten ein häufiger Filterelementwechsel durchgeführt werden. Im Zuge der Handhabung der jeweils verbrauchten, d.h. verschmutzten, Filterelemente besteht bei diesen bekannten Lösungen die Gefahr, dass es zu Verunreinigungen sowohl des Systems, d.h. insbesondere des Filtergehäuses und des Tanks, als auch der Umwelt kommt.

Zwar ist durch die DE 10 2005 001 828 A1 eine Armatur zur Bildung eines fluidführenden Anschlusses an einem Behälter aus Kunststoff, insbesondere einem Tank zur Aufnahme eines Fluids, namentlich einer Hydraulikflüssigkeit, bekannt, das ein Anschlussteil aufweist in Form eines Hohlkörpers mit einem Mantel, der sich entlang einer Längsachse des Hohlkörpers zwischen Enden desselben erstreckt, wobei der Hohlkörper in den Kunststoff der Wand des Behälters derart eingebettet ist, dass ein offenes Ende des Hohlkörpers am Rand einer Öffnung des Behälters und zumindest einem Teilbereich des Mantels des Hohlkörpers vom Kunststoff der Wand des Behälters umgeben sind. Mittels dieser Armatur lässt sich ein Filterelement sicher in einem Tank integrieren; allein bei einem Austausch des verbrauchten Filterelements gegen ein Neuelement ist wiederum nicht auszuschließen, dass es zu den vorstehend beschriebenen Verschmutzungsproblemen kommt.

Die DE 10 2009 007 389 B3 beschreibt eine Filtervorrichtung mit zumindest einem Filterelement, das ein zwischen zwei Aufnahmeteilen angeordnetes Filtermedium sowie eine an dem unteren Aufnahmeteil befindliche Anschlusseinrichtung für eine Fluidverbindung mit einer Fluideinrichtung, insbesondere einem Fluidtank, enthält, mit einem an der Anschlusseinrichtung angeordneten Verschlussteil, das durch Einwirkung eines ersten Energiespeichers für eine vom oberen Aufnahmeteil weg verlaufende Bewegung in eine die Anschlusseinrichtung sperrende Schließstellung vorgespannt ist, mit einem weiteren, zweiten Energiespeicher zur Erzeugung einer Relativbewegung zwischen dem unteren Aufnahmeteil und einem Abschlussteil der Vorrichtung und mit einer Dichteinrichtung, die zwischen unterem Aufnahmeteil und Abschlussteil abdichtend wirkt, sobald diese und das untere Aufnahmeteil unter dem Einfluss des zweiten Energiespeichers in Anlage miteinander sind.

Im Hinblick auf diese Problematik stellt sich die Erfindung die Aufgabe, eine Filtervorrichtung und einen Tank zur Verfügung zu stellen, bei denen die Gefahr einer Verschmutzung beim Austausch verbrauchter Filterelemente weitgehend ausgeschlossen ist.

Erfindungsgemäß ist der erste Teil der Aufgabe durch eine Filtervorrichtung gelöst, die die Merkmale des Patentanspruchs 1 in seiner Gesamtheit aufweist. Eine vorteilhafte Ausführungsform der Filtervorrichtung geht aus Anspruch 2 hervor. Der zweite Teil der Aufgabe wird durch einen Tank mit den Merkmalen von Anspruch 3 gelöst. Vorteilhafte Ausführungsformen des Tanks gehen aus den Ansprüchen 4 bis 8 hervor.

Gemäß dem kennzeichnenden Teil des Anspruchs 1 besteht eine wesentliche Besonderheit der Erfindung darin, dass zur Bildung der Ventilanordnung das Ende eines Eingangsstutzens von einer Kappe aus elastomerem Werkstoff überspannt ist, die derart mit Einschnitten versehen ist, dass ein bei der Funktionsposition den Eingangsstutzen durchgreifender Anschlussstutzen der Anschlusseinrichtung durch mechanische Einwirkung auf die Kappe deren Einschnitte zu Durchströmschlitzen öffnet. Diese Bauweise der Ventilanordnung ist einfach und besonders kostengünstig herstellbar, so dass das Vorhandensein der Ventilanordnung am Filterelement dessen Herstellungskosten lediglich geringfügig erhöht.

Mittels der Anschlusseinrichtung als Bestandteil des Filtergehäuses oder der dem Filtergehäuse zuordenbaren Teile ist die Ventilanordnung oder zumindest Teile derselben derart bewegbar, dass bei Außerbetriebnahme der Filtervorrichtung durch Entfernen des Filterelementes aus dem Filtergehäuse die Ventilanordnung in ihre Schließstellung und bei Inbetriebnahme der Filtervorrichtung durch Einsetzen des Filterelementes in seine Funktionsposition innerhalb des Filtergehäuses die Ventilanordnung in ihre geöffnete Stellung kommt. Dadurch ist die Gefahr beseitigt, dass bei einem Filterelementwechsel Verschmutzungen, die am verbrauchten Filterelement rohseitig angelagert und/oder abgelagert sind, beim Abziehen des verbrauchten Filterelements von der Elementaufnahme aus dem Filterelement ausfallen und zur Reinseite gelangen können. In Verbindung mit einem Filterelementwechsel müssen daher keine nachträglichen Arbeitsgänge zur Reinigung des Filtergehäuses durchgeführt werden.

Vorzugsweise ist dabei vorgesehen, dass bei der für eine Inbetriebnahme der Filtervorrichtung vorgesehenen Relativbewegung von Filterelement und Filtergehäuse aufeinander zu, sukzessive die Aufsteuerung der Ventilanordnung mittels der Anschlusseinrichtung von der Schließstellung in die geöffnete Funktionsposition erfolgt.

Bei besonders vorteilhaften Ausführungsbeispielen ist das Filtergehäuse durch einen in einen Tank integral eingeformten Filtertopf gebildet, an dessen Topfboden sich die der Elementaufnahme zugehörige Anschlusseinrichtung befindet. In besonders vorteilhafter Weise kommt dadurch ein in den Tank einzubauendes Filtergehäuse in Wegfall, weil der Filtertopf selbst als integraler Bestandteil des Tanks das Filtergehäuse bildet.

Bei besonders vorteilhaften Ausführungsbeispielen ist am Boden des Filtertopfes ein einen Durchgang für den Anschlussstutzen bildendes, mit einem bodenseitigen Wandabschnitt des Tanks zusammenhängendes Verbindungsstück angeformt, durch das hindurch sich der Anschlussstutzen von der Tankaußenseite her in den Filtertopf erstreckt.

Mit besonderem Vorteil kann die Anordnung hierbei so getroffen sein, dass sich der an das Verbindungsstück angrenzende Wandabschnitt des Tanks in einer sich vom Grund des Tanks nach oben erstreckenden, örtlichen Einbuchtung befindet. Dadurch eröffnet sich die Möglichkeit, den bodenseitigen Anschluss vollständig in den Boden des Tanks zu "versenken", wodurch sich für den Einbau des Tanks in Arbeitsmaschinen mit geringem zur Verfügung stehendem Einbauraum Vorteile ergeben.

Vorzugsweise ist der Anschlussstutzen im Verbindungsstück durch eine Verschraubung festgelegt, wobei es sich um eine einfache Standard-Einschraublösung handeln kann.

Mit besonderem Vorteil kann der Tank zusammen mit dem einen integralen Bauteil desselben bildenden Filtertopf aus Kunststoff geformt sein. Weiterhin kann in vorteilhafter Weise der an der Tankoberseite offene Filtertopf durch einen Kunststoffdeckel verschließbar sein, der mit einem am Randbereich des Filtertopfes befindlichen Innengewinde derart verschraubbar ist, dass der Deckel mit seiner Außenseite einen Teil der oberen Tankwand bildet. Bei derartigen Ausführungsbeispielen kann der Tank derart gestaltet sein, dass bei vom Tankboden ausgehendem Fluidanschluss der Tank mit einem Wandteil ein Außenhautteil der betreffenden, zugehörigen Arbeitsmaschine bildet und von der gesamten Filtervorrichtung lediglich der Deckel des Filtertopfes an der Außenhaut sichtbar ist.

Nachstehend ist die Erfindung anhand von in der Zeichnung dargestellten Ausführungsbeispielen im Einzelnen erläutert. Es zeigen:
- Fig. 1: einen abgebrochen und mit vertikaler Schnittebene aufgeschnitten gezeichneten Teil eines Fluidtanks mit zugehöriger Filtervorrichtung gemäß einem Ausführungsbeispiel der Erfindung; und
- Fig. 2: eine der Fig. 1 entsprechende Darstellung mit einem zweiten Ausführungsbeispiel der Filtervorrichtung, die nicht in den Schutzbereich der Ansprüche fällt.

In der Zeichnung sind von einem Fluidtank 1, der zur Aufnahme eines Vorrats an Hydraulikflüssigkeit vorgesehen ist, lediglich ein oberer Wandabschnitt 3 und ein unterer Wandabschnitt 5 sichtbar, die zusammen mit nicht gezeigten, weiteren Wandteilen einen Innenraum 7 für Hydraulikflüssigkeit umgrenzen, dessen Füllspiegel bei 9 angedeutet ist. Der Tank 1 ist Bestandteil eines Hydrauliksystems einer Arbeitsmaschine, etwa in Form eines Kleinbaggers, wobei vom Hydrauliksystem lediglich eine Tank-Rücklaufleitung 11 dargestellt ist, über die Hydraulikflüssigkeit, die abgereinigt werden soll, der Filtervorrichtung zugeführt und nach erfolgter Reinigung von dieser wieder in den Innenraum 7 des Tanks 1 zurückgegeben wird.

Der Tank 1 ist aus einem für Hydraulikflüssigkeit kompatiblen Kunststoffmaterial in einem Rotationsformverfahren hergestellt, wobei durch Einrotieren ein Filtertopf 13 einstückig mit den Tankwänden geformt ist. Der an der Tankoberseite 15 offene Topf 13 erstreckt sich, bezogen auf die Einbaulage des Tanks 1, vertikal von der Tankoberseite 15 bis in die Nähe des Grundes des Tanks 1. Der Topfboden 17 weist eine zentral gelegene Anschlussöffnung 19 sowie seitlich von dieser gelegene Ausströmöffnungen 21 auf, über die abgereinigte Flüssigkeit aus dem Filtertopf 13 in den Innenraum 7 des Tanks 1 gelangt. An die Anschlussöffnung 19 am Topfboden 17 schließt sich ein Verbindungsstück 23 an, über das der Topfboden 17 mit dem unteren Wandabschnitt 5 des Tanks 1 in Verbindung ist. Wie aus der Zeichnung ersichtlich, ist eine Anschlussverbindung 27 der Rücklaufleitung 11 an der Filtervorrichtung innerhalb einer vom Grund des Tanks 1 nach oben ausgewölbten Einbuchtung 25 gelegen, so dass die Anschlussarmatur innerhalb des Tankbodens sozusagen "versenkt" ist.

Von der Anschlussverbindung 27 der Rücklaufleitung 11 erstreckt sich ein Anschlussstutzen 29 in Form eines an seiner Außenseite gestuften, zylindrischen Hohlkörpers durch das Verbindungsstück 23 und die Bodenöffnung 19 des Topfes 13 in dessen Innenraum, wobei sich das Ende 31 des Anschlussstutzens 29 in einem Abstand vom Topfboden 17 befindet. Der Anschlussstutzen 29 ist durch einen Gewindeeinsatz 33 im Verbindungsstück 23 festgelegt und bildet Bestandteil einer Elementaufnahme, die mit der unteren Endkappe 35 eines Filterelementes 37 zusammenwirkt, um dieses innerhalb des Filtertopfes 13 in seiner Funktionsposition festzulegen, wobei der Filtertopf 13 als Filtergehäuse fungiert.

Das in der Zeichnung in seiner Funktionsposition dargestellte Filterelement 37 weist an seiner unteren Endkappe 35, welche in üblicher Weise eine Einfassung für ein Filtermedium 39 bildet, das in Form eines Hohlzylinders einen inneren Filterhohlraum 41 umgibt, einen zentralen Eingangsstutzen 43 auf, der bei der Funktionsposition auf den Anschlussstutzen 29 aufsteckbar ist, wobei ein Dichtelement 45 am Eingangsstutzen 43 gegenüber dem Anschlusstutzen 29 abdichtet. Die Elementaufnahme vervollständigt ein Abstandhalterring 47 aus elastomerem Werkstoff, der den Eingangsstutzen 43 umgibt und die axiale Positionierung zwischen Endkappe 35 und Topfboden 17 vorgibt.

Der an der Tankoberseite 15 offene Filtertopf 13 ist durch einen Kunststoffdeckel 49 verschließbar, der mit einem am Randbereich des Filtertopfes 13 befindlichen Innengewinde 51 verschraubbar ist, so dass der Deckel 49 lediglich mit seiner Außenseite an der Tankoberseite 15 sichtbar ist. Eine zwischen Deckel 49 und oberer Endkappe 53 des Filterelements 37 befindliche Bypass-Ventilanordnung 55 gibt in üblicher Weise bei entsprechend anstehendem Differenzdruck eine Fluidverbindung zwischen dem inneren Filterhohlraum 41 und der Außenseite des Filterelements 37 frei, wobei die Schließfeder 57 das Bypassventil 55 in der geschlossenen normalen Betriebsstellung hält.

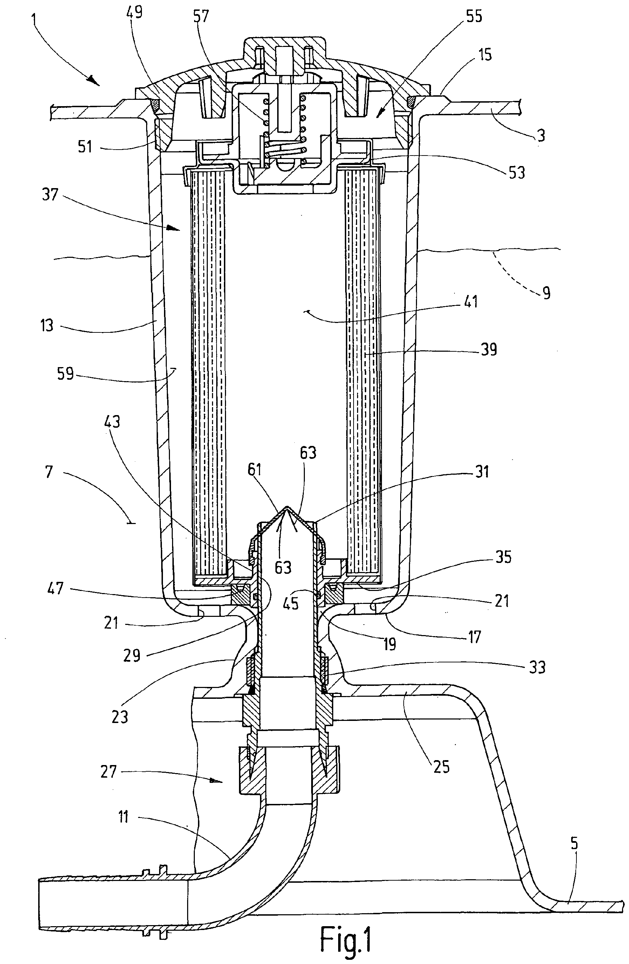

Bei der Filtration durchströmt die Hydraulikflüssigkeit, die über den Anschlussstutzen 29 in den Filterhohlraum 41 einströmt, das Filtermedium 39 von innen nach außen, so dass die abgereinigte Flüssigkeit aus dem das Filtermedium 39 umgebenden Raum des Filtertopfes 13, der die Reinseite 59 bildet, über die Ausströmöffnungen 21 in den Innenraum 7 des Tanks 1 zurückfließt. Bei dem Ausführungsbeispiel von Fig. 1 ist am freien, in den Filterhohlraum 41 ragenden Endbereich des Eingangsstutzens 43 eine Ventilanordnung vorgesehen, die aus einer das Ende des Eingangsstutzens 43 überspannenden Ventilkappe 61 aus elastomerem Material gebildet ist. Diese Kappe 61 weist mehrere Einschnitte 63 auf. Ohne auf die Ventilkappe 61 ausgeübte mechanische Einwirkung bildet die Ventilkappe 61 bei geschlossenen Einschnitten 63 einen Verschluss des Eingangsstutzens 43. Wenn jedoch das Filterelement 37, wie es in Fig. 1 dargestellt ist, in die Funktionsposition gebracht und mit dem Eingangsstutzen 43 auf den Anschlussstutzen 29 aufgesteckt ist, wird die Ventilkappe 61 durch mechanische Einwirkung des freien Endes 31 des Anschlussstutzens 29 derart aufgespannt, wie es in Fig. 1 gezeigt ist, wodurch die Einschnitte 63 zu Durchströmschlitzen geweitet werden, so dass für den Filtrationsvorgang Flüssigkeit durch den Anschlussstutzen 29 in den Filterhohlraum 41 einströmt. Wird jedoch für einen Elementwechsel das Filterelement 37 vom Anschlussstutzen 29 abgezogen, kehrt die Ventilkappe 61 in die nicht aufgeweitete Lage zurück, bei der die Kappe 61 bei geschlossenen Einschnitten 63 das Ende des Eingangsstutzens 43 verschließt. Somit ist vermieden, dass bei einem Filterelementwechsel Verschmutzungen, die sich im Filterhohlraum 41, d.h. der Rohseite, befinden, aus dem Filterelement 37 ausfallen und die Reinseite verschmutzen. Auch bei der Handhabung des aus dem Filtertopf 13 herausgenommenen, verbrauchten Filterelements 37 ist dadurch die Gefahr einer Verschmutzung der Umwelt verringert.

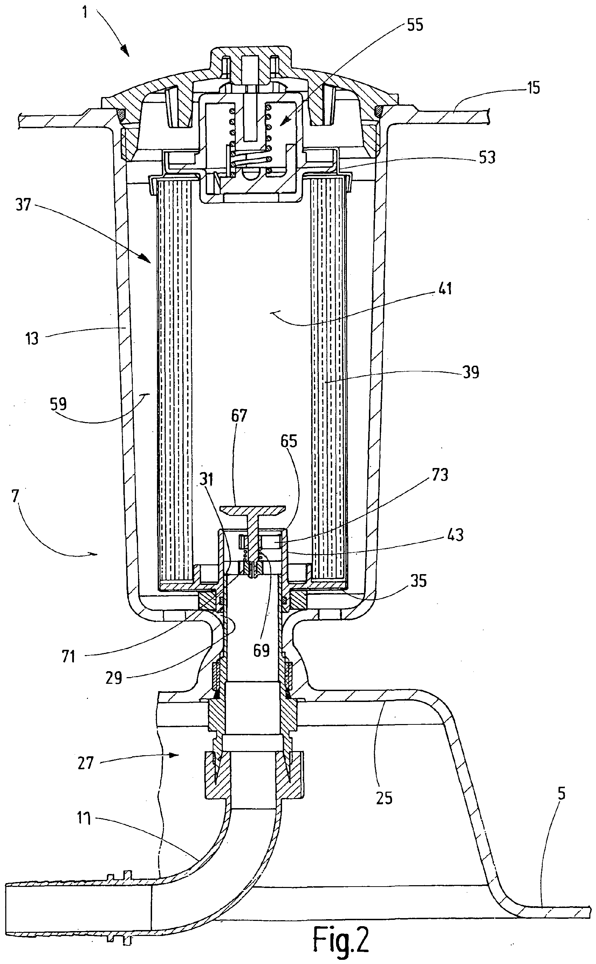

Das in Fig. 2 gezeigte nicht erfindungsgemäße Ausführungsbeispiel unterscheidet sich vom ersten Ausführungsbeispiel lediglich durch die Bauweise der Ventilanordnung am Eingangsstutzen 43 der Endkappe 35. Bei diesem Ausführungsbeispiel ist der Eingangsstutzen 43 ins Innere des Filterhohlraumes 41 hinein verlängert, so dass sich das freie Ende 65 des Eingangsstutzens 43 oberhalb des Endes 31 des Anschlussstutzens 29 befindet. Mit seinem freien Ende 65 bildet der Eingangsstutzen 43 einen Ventilsitz für einen tellerartigen Ventilkörper 67 der Ventilanordnung. Bei der in Fig. 2 gezeigten Funktionsposition ist der axial bewegbare Ventilkörper 67 gegen die Einwirkung einer Schließfeder 69 vom Ende des Eingangsstutzens 43 abgehoben, weil der Anschlussstutzen 29 mit seinem inneren Ende 31 einen Federträger 71, der innerhalb des Eingangsstutzens 43 bewegbar geführt ist, nach oben bewegt hat, wodurch der Ventilkörper 67 nach oben bewegt und vom Ventilsitz abgehoben wird, wobei die Schließfeder 69 zwischen dem Federträger 71 und einem im Eingangsstutzen 43 fest angeordneten zweiten Federträger 73 stärker zusammengepreßt wird. Wird nun das Filterelement 37 beim Elementwechsel von der Elementaufnahme abgezogen und aus dem Filtertopf 13 herausgenommen, dann bewegt sich der Ventilkörper 67 bei nur teilweiser Entspannung der Schließfeder 69 an den Ventilsitz am Ende 65 des Eingangsstutzens 43 und verschließt diesen. Somit ist die Funktionsweise des zweiten Ausführungsbeispiels die gleiche wie beim zuerst beschriebenen Beispiel. Da, mit Ausnahme der abweichenden Bauart der Ventilanordnung, bei beiden Ausführungsbeispielen die übrigen Komponenten vergleichbar sind, sind in Fig. 2 nicht sämtliche, bei beiden Ausführungsbeispielen gleich ausgebildete Einzelheiten beziffert.

## Patentansprüche

1. Filtervorrichtung mit mindestens einem Filterelement (37), das in einem Filtergehäuse aufnehmbar ist, das zumindest eine Anschlusseinrichtung (29) zur Bildung einer Fluidverbindung mit dem Filterelement (37) aufweist, wobei die Anschlusseinrichtung (29) für die Zufuhr des zu reinigenden Fluids zur Rohseite (41) des Filterelements (37) vorgesehen und Bestandteil der Elementaufnahme ist, mit der das in Funktionsposition befindliche Filterelement (37) zusammenwirkt, wobei mittels der Anschlusseinrichtung (29) als Bestandteil des Filtergehäuses oder der dem Filtergehäuse zuordenbaren Teile eine Ventilanordnung (61) oder zumindest Teile derselben derart bewegbar sind, dass bei Außerbetriebnahme der Filtervorrichtung durch Entfernen des Filterelementes (37) aus dem Filtergehäuse die Ventilanordnung (61) in ihre Schließstellung und bei Inbetriebnahme der Filtervorrichtung durch Einsetzen des Filterelementes (37) in seine Funktionsposition innerhalb des Filtergehäuses die Ventilanordnung (61) in ihre geöffnete Stellung kommt, wobei das von seinem inneren Filterhohlraum (41) her zur Außenseite seines Filtermediums (39) hin bei der Filtration durchströmbare Filterelement (37) mit zumindest einer Endkappe (35) versehen ist, wobei die in der Funktionsposition des Filterelements (37) untere Endkappe (35) für das Zusammenwirken mit der Elementaufnahme einen in den Filterhohlraum (41) ragenden Eingangsstutzen (43) aufweist, an dem die Ventilanordnung (61, 67, 69) angebracht ist und in den bei der Funktionsposition der Anschlussstutzen (29) der Anschlusseinrichtung als Bestandteil der Elementaufnahme unter Abdichtung (45) eingreift, **dadurch gekennzeichnet, dass** zur Bildung der Ventilanordnung das Ende des Eingangsstutzens (43) von einer Kappe (61) aus elastomerem Werkstoff überspannt ist, die derart mit Einschnitten (63) versehen ist, dass der bei der Funktionsposition den Eingangsstutzen (43) durchgreifender Anschlussstutzen (29) der Anschlusseinrichtung durch mechanische Einwirkung auf die Kappe (61) deren Einschnitte (63) zu Durchströmschlitzen öffnet.

2. Filtervorrichtung nach Anspruch 1, **dadurch gekennzeichnet, dass** bei der für eine Inbetriebnahme der Filtervorrichtung vorgesehenen Relativbewegung von Filterelement (37) und Filtergehäuse aufeinander zu, sukzessive die Aufsteuerung der Ventilanordnung (61; 67, 69) mittels der Anschlusseinrichtung (29) von der Schließstellung in die geöffnete Funktionsposition erfolgt.

3. Tank mit einer Filtervorrichtung nach einem der vorstehenden Ansprüche, **dadurch gekennzeichnet, dass** das Filtergehäuse durch einen in den Tank (1) integral eingeformten Filtertopf (13) gebildet ist, an dessen Topfboden (17) sich die der Elementaufnahme des Filterelements (37) zugehörige Anschlusseinrichtung (29) befindet.

4. Tank nach Anspruch 3, **dadurch gekennzeichnet, dass** am Boden (17) des Filtertopfes (13) ein einen Durchgang für den Anschlussstutzen (29) bildendes, mit einem bodenseitigen Wandabschnitt (5) des Tanks (1) zusammenhängendes Verbindungsstück (23) angeformt ist, durch das hindurch sich der Anschlussstutzen (29) von der Tankaußenseite her in den Filtertopf (13) erstreckt.

5. Tank nach Anspruch 4, **dadurch gekennzeichnet, dass** sich der an das Verbindungsstück (23) angrenzende Wandabschnitt (5) des Tanks (1) in einer sich vom Grund des Tanks (1) nach oben erstreckenden, örtlichen Einbuchtung (25) befindet.

6. Tank nach Anspruch 4 oder 5, **dadurch gekennzeichnet, dass** der Anschlussstutzen (29) im Verbindungsstück (23) durch eine Verschraubung (33) festgelegt ist.

7. Tank nach einem der Ansprüche 3 bis 6, **dadurch gekennzeichnet, dass** der Tank (1) zusammen mit dem ein integrales Bestandteil desselben bildenden Filtertopfes (13) aus Kunststoff geformt ist.

8. Tank nach einem der Ansprüche 3 bis 7, **dadurch gekennzeichnet, dass** der an der Tankoberseite (15) offene Filtertopf (13) durch einen Kunststoffdeckel (49) verschließbar ist, der mit einem am Öffnungsrandbereich des Filtertopfes (13) befindlichen Innengewinde (51) derart verschraubbar ist, dass der Deckel (49) mit seiner Außenseite Teil der oberen Tankwand bildet.

## Claims

1. A filter device having at least one filter element (37) that can be accommodated in a filter housing which has at least one connection device (29) for forming a fluid connection to the filter element (37), the connection device (29) being provided for the supply of the fluid to be cleaned to the unfiltered side (41) of the filter element (37) and being a component of the element receiver with which the filter element (37) which is in the operating position interacts, a valve arrangement (61), or at least parts of the same, being able to be moved by means of the connection device (29) as a component of the filter housing or of the parts which can be assigned to the filter housing such that when the filter device is shut off by removing the filter element (37) from the filter housing the valve arrangement (61) moves into its closed position, and when the filter device is started up by inserting the filter element (37) into its operating position within the filter housing, the valve arrangement (61) moves into its open position, the filter element (37) through which flow can take place from its inner filter cavity (41) to the outside of its filter medium (39) during filtration being provided with at least one end cap (35), the lower end cap (35) in the operating position of the filter element (37) for the interaction with the element receiver having an inlet fitting (43) which projects into the filter cavity (41), to which the valve arrangement (61, 67, 69) is attached and which, in the operating position, the connection fitting (29) of the connection device engages as a component of the element receiver with sealing (45), **characterised in that** in order to form the valve arrangement, the end of the inlet fitting (43) is spanned by a cap (61) made of elastomer material which is provided with notches (63) such that the connection fitting (29) of the connection device which penetrates the inlet fitting (43) in the operating position by mechanical action on the cap (61) opens its notches (63) to form flow slots.

2. The filter device according to Claim 1, **characterised in that** in the relative motion of the filter element (37) and the filter housing toward one another which is provided for a start-up of the filter device, the opening of the valve arrangement (61; 67, 69) by means of the connection device (29) from the closed position into the opened operating position takes place in succession.

3. A tank having a filter device according to any of the preceding claims, **characterised in that** the filter housing is formed by a filter bowl (13) which is moulded integrally into the tank (1), on the bowl bottom (17) of which the connection device (29) which belongs to the element receiver of the filter element (37) is located.

4. The tank according to Claim 3, **characterised in that** on the bottom (17) of the filter bowl (13) a connection piece (23) is moulded which is joined to a bottom-side wall section (5) of the tank (1) which forms a passage for the connection fitting (29) and through which the connection fitting (29) extends from the outside of the tank into the filter bowl (13).

5. The tank according to Claim 4, **characterised in that** the wall section (5) of the tank (1) adjoining the connecting piece (23) is located in a local indentation (25) which extends upwards from the base of the tank (1).

6. The tank according to Claim 4 or 5, **characterised in that** the connection fitting (29) in the connecting piece (23) is fixed by a screw union (33).

7. The tank according to any of Claims 3 to 6, **characterised in that** the tank (1) together with the filter bowl (13) which forms an integral component of the same is moulded from plastic.

8. The tank according to any of Claims 3 to 7, **characterised in that** the filter bowl (13) which is open on the top (15) of the tank can be closed by a plastic cover (49) which can be screwed to an internal thread (51) located on the opening edge region of the filter bowl (13) such that the cover (49) forms with its outside a part of the upper tank wall.

## Revendications

1. Dispositif de filtration, comprenant au moins un élément (37) de filtre, qui peut être reçu dans une enveloppe de filtre, ayant au moins un dispositif (29) de raccordement pour former une liaison pour du fluide avec l'élément (37) de filtre, le dispositif (29) de raccordement étant prévu pour l'apport du fluide à épurer au côté (41) sale de l'élément (37) de filtre et faisant partie du logement d'élément avec lequel coopère l'élément (37) de filtre se trouvant en la position de fonctionnement, dans lequel, au moyen du dispositif (29) de raccordement, peuvent, comme partie constitutive de l'enveloppe du filtre ou de parties pouvant être associées à l'enveloppe du filtre, être déplacés un agencement (6) de vanne ou au moins des parties de celui-ci, de manière à ce que, lorsque le dispositif de filtration est mis hors de fonctionnement, en retirant l'élément (37) de filtre de l'enveloppe du filtre, l'agencement (61) de vanne vienne en sa position fermée et, lors de la mise en fonctionnement du dispositif de filtration par mise de l'élément (37) de filtre en sa position de fonctionnement à l'intérieur,de l'enveloppe du filtre, l'agencement (61) de vanne vienne en sa position ouverte,
dans lequel l'élément (37) de filtre, pouvant être traversé à la filtration de sa cavité (41) intérieure de filtre à la face extérieure de son milieu (39) filtrant, est pourvu d'au moins une coiffe (35) d'extrémité, la coiffe (35) d'extrémité inférieure dans la position de fonctionnement de l'élément (37) de filtre ayant, pour coopérer avec le logement d'élément, une tubulure (43) d'entrée, qui pénètre dans la cavité (41) du filtre, qui est mise sur l'agencement (61, 67, 69) de vanne et qui y pénètre, avec étanchéité (45), en tant que partie constitutive du logement d'élément en la position de fonction de la tubulure (29) de raccordement du dispositif de raccordement, **caractérisé en ce que**, pour former l'agencement de vanne, l'extrémité de la tubulure (43) d'entrée est coiffée d'une coiffe (61) en matériau élastomère, qui est pourvue d'entailles (63), de manière à ce que la tubulure (29) de raccordement, dans laquelle passe la tubulure (43) d'entrée en la position de fonctionnement, du dispositif de raccordement, ouvre, par action mécanique sur la coiffe (61), ses entailles (63) en des fentes de passage.

2. Dispositif de filtration suivant la revendication 1, **caractérisé en ce que**, lors du déplacement relatif, prévu pour la mise en fonctionnement du dispositif de filtration, de l'élément (37) de filtre et de l'enveloppe de filtre l'un sur l'autre, la commande de l'agencement (61; 67, 69) de vanne s'effectue successivement, au moyen du dispositif (29) de raccord, de la position de fermeture à la position de fonctionnement ouverte.

3. Cuve ayant un dispositif de filtration suivant l'une des revendications précédentes, **caractérisée en ce que** l'enveloppe du filtre est formée par un pot (13) de filtre, qui est venu de moulage avec la cuve (1) et sur le fond (17) duquel se trouve le dispositif (29) de raccordement associé au logement de l'élément (37) de filtre.

4. Cuve suivant la revendication 3, **caractérisée en ce qu'**au fond (17) du pot (13) de filtre est formée une pièce (23) de liaison, qui forme un passage pour la tubulure (29) de raccordement, qui est d'une seule pièce avec une partie (5) de paroi du côté du fond de la cuve (1) et à travers laquelle la tubulure (29) de raccordement s'étend du côté extérieur de la cuve au pot (13) du filtre.

5. Cuve suivant la revendication 4, **caractérisée en ce que** la partie (5) de paroi, voisine de la pièce (23) de liaison, de la cuve (1) se trouve dans une bosse (25) rentrante locale s'étendant du fond de la cuve (1) vers le haut.

6. Cuve suivant la revendication 4 ou 5, **caractérisée en ce que** la tubulure (29) de raccordement est fixée dans la pièce (23) de liaison par un vissage (33).

7. Cuve suivant l'une des revendications 3 à 6, **caractérisée en ce que** la cuve (1) est moulée en matière plastique ensemble avec le pot (13) de filtre en formant une partie constitutive venue de moulage.

8. Cuve suivant l'une des revendications 3 à 7, **caractérisée en ce que** le pot (13) de filtre, ouvert du côté (15) supérieur de la cuve, peut être formé par un couvercle (49) en matière plastique, qui peut se visser, par un taraudage (51) se trouvant sur la partie de bord d'ouverture du pot (13) de filtre, de manière à ce que le couvercle (49) forme, par son côté extérieur, une partie de la paroi supérieure de la cuve.
